# EUROPEAN PATENT APPLICATION

(11) **EP 4 426 054 A1**
(43) Date of publication of application: **04.09.2024**
(21) Application number: 22934073.2
(22) Date of filing: 30.03.2022
(51) Int. Cl.: H04W 76/12, H04L 101/659

(54) **PACKET FORWARDING METHOD AND APPARATUS**

(71) Applicant: New H3C Technologies Co., Ltd., Hangzhou, Zhejiang 310052 (CN)
(72) Inventor: YE, Jinrong, Beijing 100102 (CN)
(74) Representative: Grünecker Patent- und Rechtsanwälte PartG mbB
(86) International application number: PCT/CN2022/084010
(87) International publication number: WO 2023/184220

(57) **Abstract**

Embodiments of the present application provide a packet forwarding method and apparatus. In the embodiments of the present application, by automatically assigning different Locators to a gateway device and to different APs connected under the gateway device, automatic deployment of SRv6 in a three-layer network is implemented, so as to make full use, in the three-layer network, of the advantages brought by SRv6. Furthermore, in the embodiments, SRv6 tunnels are deployed between the gateway device and the APs on the basis of the Locators assigned to the gateway device and the APs, and packets are transmitted between the gateway device and the APs by means of the SRv6 tunnels, such that the packet forwarding method applied to the three-layer network in which SRv6 is deployed is implemented.

## Description

### TECHNICAL FIELD

The present disclosure relates to network communication technology, and in particular to packet forwarding methods and apparatuses.

### BACKGROUND

SRv6 (segment routing IPv6 (internet protocol version 6)) implements segment routing (SR) based on an IPv6 forwarding plane. In SRv6, a segment identifier (SID) is in the form of an IPv6 address, but it does not correspond to an interface address on any device.

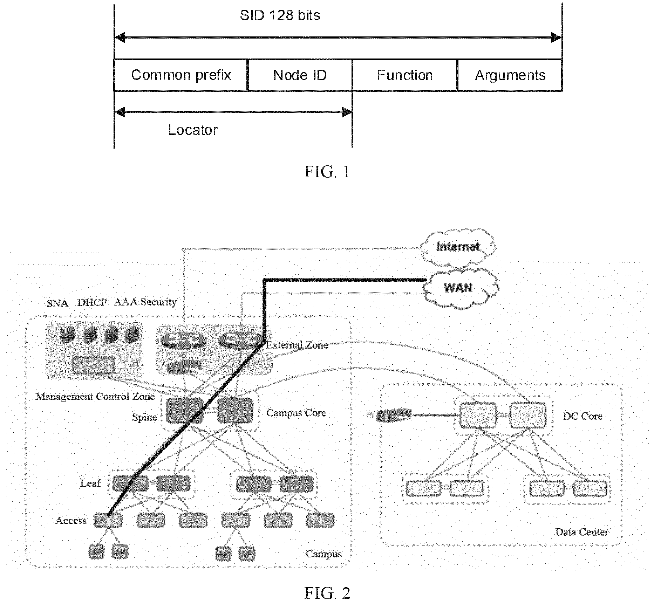

As shown in FIG. 1, the SID at least includes a Locator, a Function, and Arguments.

Locator: Locator is unique in an SR domain. In specific applications, the Locator can include a Common prefix and a network node identifier (Node ID).

Function: Function is used to identify an operation instruction bound to SID. In the SR domain, when receiving a packet, a node will perform related operations based on the Function in the SID carried by the packet. In specific applications, the Function can include an operation instruction type and an operation instruction value used to represent the operation instruction.

Arguments: Arguments define information such as a flow and service of the packet.

### SUMMARY

Examples of the present disclosure provide packet forwarding methods and apparatuses to achieve packet forwarding applied to a layer three network with SRv6 deployed.

An example of the present disclosure provides a packet forwarding method, applied to a gateway device in a layer three network, where there is a SRv6 (segment routing IPv6 (internet protocol version 6)) tunnel between the gateway device and an access point (AP) connected to the gateway device, and the gateway device and different APs connected to the gateway device are allocated different locators; the method includes:
when a first packet is received through the SRv6 tunnel, where a destination IP address in an IPv6 encapsulation header carried by the first packet includes at least a locator and a function allocated to the gateway device, performing IPv6 encapsulation header decapsulation on the first packet to obtain a second packet, where a destination media access control (MAC) address of the second packet is a MAC address of a layer three gateway interface associated with a virtual switch interface (VSI) instance bound to the function on the gateway device; and forwarding the second packet based on a destination IP address of the second packet;
when a third packet is received from a network side, where a destination IPv6 address in an IPv6 encapsulation header carried by the third packet includes at least a locator allocated to the gateway device, performing IPv6 decapsulation on the third packet to obtain a fourth packet; and forwarding the fourth packet based on a destination IP address of the fourth packet.

An example of the present disclosure also provides another packet forwarding method, applied to an access point (AP) connected to a gateway device in a layer three network, where there is a SRv6 (segment routing IPv6 (internet protocol version 6)) tunnel between the gateway device and the AP, and the AP, the gateway device and other APs connected to the gateway device are allocated different locators; the method includes:
when a packet is to be forwarded to the gateway device, carrying an IPv6 encapsulation header in the packet and forwarding a packet carrying the IPv6 encapsulation header through the SRv6 tunnel between the AP and the gateway device; where a destination IP address in the IPv6 encapsulation header includes at least a locator and a function allocated to the gateway device, and a source IP address in the IPv6 encapsulation header includes at least a locator and a function allocated to the AP;
when a packet is received through the SRv6 tunnel between the AP and the gateway device, performing IPv6 decapsulation on the received packet; and performing packet forwarding based on a destination media access control (MAC) address of a decapsulated packet.

An example of the present disclosure provides a packet forwarding apparatus, applied to a gateway device in a layer three network, where there is a SRv6 (segment routing IPv6 (internet protocol version 6)) tunnel between the gateway device and an access point (AP) connected to the gateway device, and the gateway device and different APs connected to the gateway device are allocated different locators; the apparatus includes:
a packet receiving unit, configured to receive a first packet through the SRv6 tunnel or a third packet from a network side;
a packet processing unit, configured to, when the first packet is received through the SRv6 tunnel, where a destination IP address in an IPv6 encapsulation header carried by the first packet includes at least a locator and a function allocated to the gateway device, perform IPv6 encapsulation header decapsulation on the first packet to obtain a second packet, where a destination media access control (MAC) address of the second packet is a MAC address of a layer three gateway interface associated with a virtual switch interface (VSI) instance bound to the function on the gateway device; and forward the second packet based on a destination IP address of the second packet;
when the third packet is received from the network side, where a destination IPv6 address in an IPv6 encapsulation header carried by the third packet includes at least a locator allocated to the gateway device, perform IPv6 decapsulation on the third packet to obtain a fourth packet; and forward the fourth packet based on a destination IP address of the fourth packet.

An example of the present disclosure also provides a packet forwarding apparatus, applied to an access point (AP) connected to a gateway device in a layer three network, where there is a SRv6 (segment routing IPv6 (internet protocol version 6)) tunnel between the gateway device and the AP, and the AP, the gateway device and other APs connected to the gateway device are allocated different locators; the apparatus includes:
a receiving unit, configured to receive packets through the SRv6 tunnel between the AP and the gateway device;
a forwarding unit, configured to, when a packet is to be forwarded to the gateway device, carry an IPv6 encapsulation header in the packet and forward a packet carrying the IPv6 encapsulation header through the SRv6 tunnel between the AP and the gateway device; where a destination IP address in the IPv6 encapsulation header includes at least a locator and a function allocated to the gateway device, and a source IP address in the IPv6 encapsulation header includes at least a locator and a function allocated to the AP;
when a packet is received through the SRv6 tunnel between the AP and the gateway device, perform IPv6 decapsulation on the received packet; and perform packet forwarding based on a destination media access control (MAC) address of a decapsulated packet.

An example of the present disclosure also provides a network device, which includes a processor and a machine-readable storage medium;
where the machine-readable storage medium stores machine executable instructions that can be executed by the processor; and
the processor is configured to execute the machine executable instructions to implement any one method as described above.

From the above technical solution, it can be seen that in the examples of the present disclosure, the automation of deploying SRv6 in a layer three network is achieved by automatically allocating different Locators to the gateway device and different APs connected to the gateway device, so as to fully utilize the advantages brought by SRv6 in the layer three network.

Further, in this example, an SRv6 tunnel is deployed between the gateway device and the AP based on Locators allocated to the gateway device and the AP, and the packet is transmitted between the gateway device and the AP through the SRv6 tunnel, thus achieving the packet forwarding method applied to the layer three network with SRv6 deployed.

### BRIEF DESCRIPTION OF THE DRAWINGS

The accompanying drawings, which are incorporated in and constitute a part of the specification, illustrate examples consistent with the present disclosure and, together with the specification, serve to explain the principles of the present disclosure.
FIG. 1 is a schematic diagram illustrating an SID structure according to an example of the present disclosure.
FIG. 2 is a schematic networking diagram illustrating a campus network where SRv6 is deployed according to an example of the present disclosure.
FIG. 3 is a flowchart illustrating a method according to an example of the present disclosure.
FIG. 4 is a flowchart illustrating Locator allocation according to an example of the present disclosure.
FIG. 5 is a schematic diagram illustrating a Locator structure according to an example of the present disclosure.
FIG. 6 is a flowchart illustrating another method according to an example of the present disclosure.
FIG. 7 is a structural diagram illustrating an apparatus according to an example of the present disclosure.
FIG. 8 is a structural diagram illustrating another apparatus according to an example of the present disclosure.
FIG. 9 is a structural diagram illustrating an electronic device according to an example of the present disclosure.

### DETAILED DESCRIPTION OF THE EMBODIMENTS

Examples will be described in detail herein, with the illustrations thereof represented in the accompanying drawings. When the following descriptions involve the drawings, like numerals in different drawings refer to like or similar elements unless otherwise indicated. The implementations described in the following examples do not represent all examples consistent with the present disclosure. Rather, they are merely examples of apparatuses and methods consistent with some aspects of the present disclosure.

The terms used in the present disclosure are for the purpose of describing particular examples only, and are not intended to limit the present disclosure. Terms "a", "the" and "said" in the singular form used in the present disclosure are also intended to include plurality, unless otherwise clearly indicated in the context.

SRv6 (segment routing IPv6 (internet protocol version 6)) provides a flexible and efficient traffic control means for a network, which can better achieve traffic scheduling and path optimization, ensure the quality of key services, balance the quality distribution, and improve the utilization of private lines. At present, SRv6 can be deployed in a layer three network such as a campus network. FIG. 2 shows an example of a campus network where SRv6 is deployed. In FIG. 2, a bold black line shows an SRv6 path. When SRv6 is deployed in the campus network, based on SRv6, traffic supervision and scheduling will be realized between a gateway device (which can be a Leaf node in a Spine-Leaf topology) and a wireless access point (AP).

However, in a conventional layer three network environment, to simplify deployment, the same AP configuration is often delivered to a batch of different APs based on an AP template (that is, multiple different APs have the same configuration). However, when SRv6 is applied to a layer three network such as a campus network, in order to facilitate the differentiation of APs, different Locators need to be allocated to different APs, which makes it impossible to deliver the same AP configuration for a batch of different APs based on the AP template. It is impossible to deliver the same AP configuration for a batch of different APs based on the AP template, and combined with a large number of APs in the layer three network, it will not be conducive to deployment of SRv6 in the layer three network, nor to the automation of network deployment.

In order to solve the above technical problems, an example of the present disclosure provides a method forwarding packets applied to a layer three network deployed with SRv6. In order to enable those skilled in the art to better understand the technical solution provided by the examples of the present disclosure, and to make the above purposes, features, and advantages of the examples of the present disclosure more obvious and understandable, the technical solution in the examples of the present disclosure will be further explained in detail with the accompanying drawings.

The following describes the method provided by the examples of the present disclosure from the perspective of a gateway device in a layer three network.

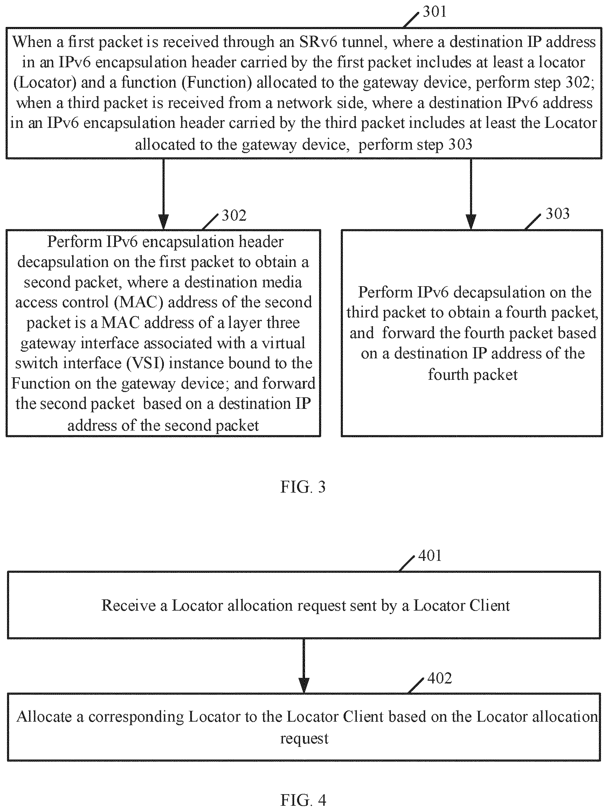

Refer to FIG. 3, which is a flowchart illustrating a method according to an example of the present disclosure. This method is applied to a gateway device in a layer three network. Optionally, when applied to a Spine-Leaf network topology, the gateway device herein can be a Leaf node.

In this example, the gateway device and different APs connected to the gateway device are allocated different Locators. Optionally, in this example, a network device can be designated as a Locator manger, which allocates different Locators to the gateway device and each AP connected to the gateway device.

For example, if a gateway device is designated as the Locator Manger, the gateway device that serves as the Locator Manger will allocate different Locators to the gateway device and each AP connected to the gateway device (in this case, the AP can be referred to as a Locator client). FIG. 4 provides an example of how to allocate different Locators to a gateway device and each AP connected to gateway device when the gateway device is a Locator Manger, which will not be described in detail herein.

For another example, if a non-gateway device, for example, an access controller (AC) is designated as the Locator Manger, the Locator Manger can allocate different Locators to the gateway device and different APs connected to the gateway device (in this case, the gateway device and different APs connected to the gateway device can be referred to as Locator Clients). The specific allocation method is similar to the allocation shown in FIG. 4, and will not be described in detail herein.

In this example, based on allocated Locators, an SRv6 tunnel (the SRv6 tunnel herein can be, for example, an SRv6 pseudowire (PW), etc., which is not specifically limited in this example) can be established between the gateway device and the AP based on Locators allocated to the gateway device and an AP. Optionally, the SRv6 tunnel herein can be established dynamically or configured statically, which is not specifically limited in this example.

Based on the above description, as shown in FIG. 3, the method may include the following steps.

Step 301, when a first packet is received through an SRv6 tunnel, where a destination IP address in an IPv6 encapsulation header carried by the first packet includes at least a locator (Locator) and a function (Function) allocated to the gateway device, step 302 is performed; when a third packet is received from a network side, where a destination IPv6 address in an IPv6 encapsulation header carried by the third packet includes at least the Locator allocated to the gateway device, step 303 is performed.

It should be noted that in this example, the first and third packets are only named for convenience of description, not for limitation.

For the SRv6 tunnel between the gateway device and the AP described above, in this example, when the first packet is received through the SRv6 tunnel, it means that the gateway device receives the first packet forwarded by the AP through the SRv6 tunnel. When the gateway device receives the first packet forwarded by the AP through the SRv6 tunnel, the following step 302 is performed.

Step 302, IPv6 encapsulation header decapsulation is performed on the first packet to obtain a second packet, where a destination media access control (MAC) address of the second packet is a MAC address of a layer three gateway interface associated with a virtual switch interface (VSI) instance bound to the Function on the gateway device; and the second packet is forwarded based on a destination IP address of the second packet.

The step 302 is performed on the premise that the gateway device receives the first packet through the SRv6 tunnel.

Optionally, in this example, a Local SID corresponding to the gateway device can be determined based on the Locator and the Function (including an operation instruction value (Opcode) and a Function type) allocated to the gateway device, and Functions in respective Local SIDs are different. Table 1 illustrates the two Local SIDs corresponding to the gateway device (the Local SIDs will be described as examples below):

**Table 1**

| Locator of gateway device | Function operation instruction value (Opcode) | Function type |
|---|---|---|
| A0:B0:01:02::/64 | Opcode1 | end-dt2u |
| A0:B0:01:02::/64 | Opcode2 | end-dt2u |

In Table 1, end dt2u is used to indicate the decapsulation, and indicate that the packet is forwarded based on the destination IP address in the packet when the decapsulated destination MAC address is the MAC address of the layer three gateway interface associated with the VSI instance bound to the Function on the gateway device.

Based on each Local SID shown in Table 1, a corresponding IPv6 forwarding information base (FIB6) entry can be added to an FIB6 table. The FIB6 entry at least includes its corresponding Local SID. Based on this, as in step 302, when receiving the first packet through the SRv6 tunnel, the gateway device will search in the FIB6 table based on the destination IP address carried by the first packet. If a corresponding FIB6 entry is found, then according to the indication of the end-dt2u in the Local SID in the FIB6 entry, the IPv6 encapsulation header decapsulation is performed on the first packet to obtain the second packet. If it is found that the destination MAC address of the second packet is the MAC address of the layer three gateway interface associated with the VSI instance bound to the above Function on the gateway device, the second packet is forwarded based on the destination IP address in the second packet. The following will provide an example of how to forward the second packet based on the destination IP address in the second packet, which will not be described in detail herein.

Step 303, IPv6 decapsulation is performed on the third packet to obtain a fourth packet, and the fourth packet is forwarded based on a destination IP address of the fourth packet.

The step 303 is performed on the premise of receiving the third packet from the network side. When receiving the third packet, the gateway device will perform the corresponding operation based on the Function included in the destination IPv6 address in the IPv6 encapsulation header carried by the packet. If the Function indicates IPv6 decapsulation and searching in a corresponding IP routing forwarding instance routing table, step 303 will be executed, and the IPv6 decapsulation will be performed on the third packet to obtain the fourth packet. Based on the destination IP address of the fourth packet, a corresponding IP routing forwarding instance routing entry can be found in the aforementioned IP routing forwarding instance routing table, and the packet can be forwarded based on the IP routing forwarding instance routing entry. For the specific forwarding of the packet, please refer to the following example description, which will not be described in detail herein.

To ensure that the gateway device performs corresponding operation based on the Function included in the destination IPv6 address in the IPv6 encapsulation header carried by the packet, optionally, in this example, when learning an IP address of a terminal connected to any AP, the gateway device determines Function that matches the IP address of the terminal and reports the Function and the IP address of the terminal to the network side, so that the destination IPv6 address in the IPv6 encapsulation header carried by the packet sent from the network side to the terminal in future at least includes the above Function. The Function indicates IPv6 decapsulation and searching in an IP routing forwarding instance routing table that matches the IP address of the terminal. Herein, when the IP address of the terminal is IPv4, the IP routing forwarding instance routing table is an IPv4 virtual private network (VPN) routing table; when the IP address of the terminal is IPv6, the IP routing forwarding instance routing table is an IPv6 VPN routing table.

So far, the process shown in FIG. 3 is completed.

From the process shown in FIG. 3, it can be seen that this example achieves the automation of deploying SRv6 in a layer three network by automatically allocating different Locators to the gateway device and different APs connected to the gateway device, so as to fully utilize the advantages brought by SRv6 in the layer three network.

Further, in this example, an SRv6 tunnel is deployed between the gateway device and the AP based on Locators allocated to the gateway device and the AP, and the packet is transmitted between the gateway device and the AP through the SRv6 tunnel, thus achieving the packet forwarding method applied to the layer three network with SRv6 deployed.

The process shown in FIG. 4 will be described below.

Refer to FIG. 4, which is a flowchart illustrating Locator allocation according to an example of the present disclosure. In the process shown in FIG. 4, the Locator Manger allocates different Locators to the gateway device and each AP connected to the gateway device.

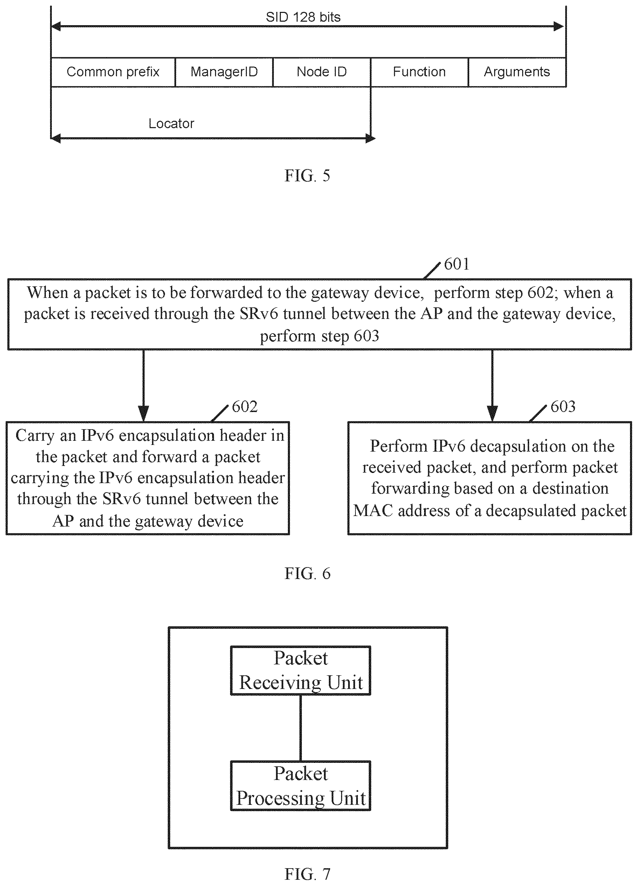

In this example, the Locator Manager manages a Locator resource pool (the Locator resource pool includes several Locators). For management convenience and compatibility with the existing Locator structure (Common prefix + Node ID), the Locator in this example can be: Common prefix + Manager ID + Node ID, as shown in FIG. 5. The reason for setting the Locator in this way is to ensure that when there are multiple Locator managers in the same networking, Locators allocated by different Locator managers are not duplicated, and to ensure the uniqueness of each Locator throughout the entire network.

In FIG. 5, the value and length of the Common prefix can be pre-designated, such as A0:B0::/40 (the value of the Common prefix is A0:B0::, with a length of 40 bits).

In FIG. 5, the value and length of the Manger ID can be pre-designated, for example, the Manger ID has a value of 1 and a length of 8 bits.

In FIG. 5, the value of Node ID can be selected from a Node ID resource pool instead of being pre-designated. Optionally, in this example, in the Node ID resource pool, Node 0 (i.e., Node ID 0) can be retained. In other words, combined with the Common prefix and Manger ID mentioned above, in this example, A0:B0:01:00::/64 can be retained and not pre-allocated.

Optionally, in this example, the gateway device can serve as a Locator Manger, and when allocating a Locator to itself, the gateway device can first select the non-zero and smallest Node ID from the Node ID resource pool. Taking the selected Node ID being 1 as an example, combined with the Common prefix and Manger ID mentioned above, in this example, when the gateway serves as the Locator Manager, the Locator allocated to itself can be A0:B0:01:01::/64.

As the Locator Manager, the gateway device will allocate a Locator to each AP as the Locator Client according to the process shown in FIG. 4. If the gateway device is not the Locator Manager, the Locator Manager will allocate Locators to the gateway device and each AP connected to the gateway device as the Locator Clients according to the process shown in FIG. 4.

As shown in FIG. 4, the process can include the following steps.

Step 401, a Locator allocation request sent by a Locator Client is received.

In this example, when the Locator Client is online (for example, after the Locator Client being online and being allocated an IPv6 address, etc.), the Locator Client will send the Locator allocation request to the Locator Manager. Herein, the Locator allocation request can carry at least the IPv6 address, a MAC address, and a Locator Client identifier of the Locator Client.

Step 402, a corresponding Locator is allocated to the Locator Client based on the Locator allocation request.

Optionally, in this example, there is a protocol connection between the Locator Manager and the Locator Client for Locator allocation. The protocol connection can be a transmission control protocol (TCP) connection or a user datagram protocol (UDP) connection.

As an example, when the protocol link is the TCP connection, an available Node ID can be selected from available Node IDs in the Node ID resource pool. The selected available Node ID, together with the Common prefix and the Manger ID mentioned above, can form a Locator, which will be carried in a Locator allocation response and sent to the Locator client through the TCP connection.

Optionally, there are many ways to select an available Node ID from the available Node IDs in the Node ID resource pool, for example, the smallest Node ID is directly selected from the available Node IDs in the Node ID resource pool in sequence. Take the example of directly selecting the smallest Node ID from the available Node IDs in the Node ID resource pool in sequence, if Node 1 (i.e., Node ID is 1) has been previously selected and combined with the aforementioned retained Node 0, available Node IDs in the current Node ID resource pool include Node 2 (i.e., Node ID is 2), Node 3 (i.e., Node ID is 3)... Node k

(i.e., Node ID is k), and Node 2 can be selected from the available Node IDs in the current Node ID resource pool. The selected available Node ID, together with the Common prefix and the Manger ID mentioned above, can form a Locator, namely A0:B0:01:02::/64.

As another example, the above protocol link is a UDP connection. Compared to TCP, UDP does not require the establishment and maintenance of complex TCP connections between the Locator Manager and the Locator Client, and the Locator Manager does not incur significant system (such as CPU) overhead due to maintaining a large number of TCP connections. When the above protocol link is the UDP connection, it will not simply return a Locator allocation response like the TCP connection to achieve Locator allocation. Optionally, in this example, when the above protocol link is the UDP connection, the corresponding Locator is allocated to the AP as the Locator Client based on the Locator allocation request in step 402 can include the following steps.

Step a1, a Locator allocation response is returned to the Locator Client through the UDP connection.

Herein, the Locator allocation response carries at least a Locator allocated for the Locator Client. There are many ways to allocate a Locator to a Locator Client, for example, an available Node ID is selected from available Node IDs in the Node ID resource pool, and the available Node ID, together with the Common prefix and the Manger ID mentioned above can form a Locator to be allocated to the Locator Client.

Optionally, in this example, the Locator allocation response can further carry an IPv6 address and a MAC address of the Locator Client, and a device ID of the Locator Manager.

Step a2, a designated Locator allocation request returned by the Locator Client based on the Locator allocation response is received through the UDP connection.

Optionally, in this example, the designated Locator allocation request carries at least the Locator carried by the Locator allocation response. The reason why the designated Locator allocation request is sent herein is to confirm whether the Locator carried by the Locator allocation response can be occupied.

Optionally, in this example, the designated Locator allocation request can also carry the IPv6 address, the MAC address and a Locator Client identifier of the Locator Client, and the device ID of the Locator Manager.

Step a3, a Locator allocation confirmation message is returned to the Locator Client through the UDP connection to confirm the allocation of the Locator to the Locator Client.

Optionally, in this example, the Locator allocation confirmation message is used to confirm that the Locator client can occupy the Locator carried by the designated Locator allocation request.

Optionally, in this example, the Locator allocation confirmation message can also carry the IPv6 address and the MAC address of the Locator Client, and the device ID of the Locator Manager.

So far, through steps a1 to a3 above, how to allocate a Locator to the Locator Client when the protocol link is a UDP connection can be achieved.

It should be noted that in this example, when the above protocol connection is a UDP connection, based on the characteristics of UDP connection, after allocating the corresponding Locator to the Locator Client, it is also necessary to manage the corresponding Locator allocated to the Locator Client in time. The specific management method can be achieved through steps a4 to a5 as follows.

Step a4, a Locator occupation request sent by the Locator Client is received through the UDP connection. If the Locator Client is allowed to continue to occupy the allocated Locator, a Locator occupation confirmation message is returned to the Locator Client through the UDP connection to confirm that the Locator Client continues to occupy the allocated Locator.

In this example, after being allocated a Locator, the Locator Client will send the Locator occupation request in a period T (the Locator occupation request is similar to the designated Locator allocation request mentioned above). The Locator occupation request carries the Locator allocated to the Locator Client to confirm whether the Locator can continue to be occupied.

When receiving the Locator occupation request sent by the Locator Client, the Locator Manager generally allows the Locator Client to continue to occupy the allocated Locator, and will return the Locator occupation confirmation message to the Locator Client through the UDP connection to confirm that the Locator Client continues to occupy the allocated Locator. In some special cases, if the Locator Client is not allowed to continue to occupy the allocated Locator, the Locator will be released and the Locator Client will be triggered to request the Locator again according to the process shown in FIG. 4 above.

Step a5, if the Locator occupation request sent by the Locator Client is not received within a preset time period, the Locator allocated to the Locator Client is be released.

For example, if the Locator Manager does not receive a Locator occupation request from the Locator Client within the above three periods (Ts), it is considered that the Locator Client is offline, and the allocated Locator will be released (that is, the Node ID in the Locator becomes an available Node ID).

Through steps a4 to a5, it is realized how to manage the corresponding Locator allocated to the Locator Client in time after allocating the corresponding Locator.

Optionally, in this example, after allocating the corresponding Locator to the Locator Client, the Locator Manager can perform recording through an entry. Table 2 provides an example of Locator allocation entries.

**Table 2**

| MAC address of Locator Client | IPv6 address of Locator Client | Locator allocated to Locator Client | name of Locator Client |
|---|---|---|---|
| 946B-3BA9-0402 | A:B:C:D:966B:3BFF: FEA9:402 | A0:B0:01:02::/64 | AP1 |
| ACD5-D447-0702 | A:B:C:D:AED5:D4FF :FE47:702 | A0:B0:01:03::/64 | AP2 |

Optionally, in this example, the Locator Manager can generate Locator routes based on the Locator allocation entries. Taking Table 2 as an example, the corresponding Locator routs are shown in Table 3:

**Table 3**

| destination IPv6 Address (AP Locator) | NextHop (IPv6 address of an interface connected to the gateway device on an AP) | interface (outbound interface) |
|---|---|---|
| A0:B0:01:02::/64 | A:B:C:D:966B:3BFF:FEA9:402 | Interface VLAN 4092 |
| A0:B0:01:03::/64 | A:B:C:D:AED5:D4FF:FE47:702 | Interface VLAN 4092 |

In Table 3, the interface VLAN 4092 is a layer three interface on the Locator Manager for forwarding SRv6 services to the AP. The interface VLAN 4092 can be the layer three interface that receives the Locator allocation request. Optionally, when a non-gateway device serves as the Locator Manager, the Locator Manager will deliver the Locator routes to the gateway device, so that the gateway device forwards packets based on the Locator routes later. The following will provide examples of how to forward packets.

The Local SID shown in Table 1 above is analyzed and described below.

Optionally, in this example, the Local SID can be generated based on a service virtual local area network (VLAN) identifier (ID). On this premise, the Function operation instruction value (Opcode) in the Local SID mentioned above can be represented by the service VLAN ID. For example, WLAN services corresponding to service VLAN 3502 and service VLAN 3503 can be delivered to an gateway device as the Locator Manager, and the Local SIDs shown in the above Table 1 can be transformed into the following Table 4:

**Table 4**

| Locator of gateway device | Function operation instruction value (Opcode) | Function type |
|---|---|---|
| A0:B0:01:02::/64 | service VLAN 3502 | end-dt2u |
| A0:B0:01:02::/64 | service VLAN 3503 | end-dt2u |

From Table 4, it can be seen that in this example, by setting the Function operation instruction value (Opcode) to the service VLAN ID, it can be realized that the Function operation instruction value represents the service VLAN ID on the one hand and the corresponding network operation instruction on the gateway device on the other hand, which can improve the data plane forwarding matching efficiency.

It should be noted that the above Local SIDs can also be implemented through configuration commands. For example, the configuration commands corresponding to Table 4 can be:
Segment routing IPv6
Locator Leaf1 ipv6-prefix 1 A0:B0:01:02::64 static 32
opcode 3502 end-dt2u VSI service-vlan-3502
opcode 3503 end-dt2u VSI service-vlan-3503

In addition, it should be noted that in this example, after performing the IPv6 encapsulation header decapsulation on the first packet to obtain the second packet, the gateway device can perform source MAC learning to generate a MAC entry. Table 5 shows the MAC entries as an example:

**Table 5**

| MAC address | service VLAN ID | outbound interface |
|---|---|---|
| A11B-EBA3-0206 | service-vlan-3502 | SRv6 tunnel to AP1 |
| 9E1A-2BA5-0108 | service-vlan-3502 | SRv6 tunnel to AP2 |

Specifically, in this example, if the second packet mentioned above is an address resolution protocol (ARP) packet or an IPv6 neighbor discovery (ND) packet, the gateway device will also perform ARP or IPv6 ND learning, and a learned ARP or IPv6 ND entry at least includes:

MAC address: a MAC address of an AP that sends the ARP packet or the IPv6 ND packet;

IP address: an IP address of the AP that sends the ARP packet or the IPv6 ND packet.

Based on the above table entry, the forwarding of the second packet based on the destination IP address in the second packet in step 302 is described as follows.

Optionally, in this example, forwarding the second packet based on the destination IP address in the second packet in step 302 above may include the following steps b1 to b3.

Step b1, layer two header decapsulation is performed on the second packet to obtain a fifth packet.

Optionally, in this example, the fifth packet obtained after performing the layer two header decapsulation on the second packet is essentially a layer three packet, which has a destination IP address and a source IP address.

Step b2, an IP routing entry that matches the destination IP address of the fifth packet is searched for in an IP routing forwarding instance routing table associated with the layer three gateway interface.

Optionally, the found IP routing entry includes the destination IP address of the fifth packet. The IP routing forwarding instance routing table can be established based on the existing route learning method.

Step b3, if an outbound interface of the IP routing entry is an SRv6 tunnel port from the gateway device to a first AP, a sixth packet is forwarded based on an outbound interface in an obtained first Locator route that matches a Locator of the first AP.

Herein, the first AP refers to any AP in general, which is named for convenience of description and not for limitation.

Optionally, in this example, the sixth packet is obtained by adding at least an IPv6 encapsulation header to the fifth packet. For example, a layer two header can be added to the fifth packet first, and then an IPv6 encapsulation header can be added to obtain the sixth packet.

Taking the sixth packet carrying the newly added layer two header and IPv6 encapsulation header as an example, in an example, the layer two header includes at least a destination MAC address and a source MAC address. The destination MAC address is a MAC address that corresponds to the IP address of the first AP and is found in the above ARP entry or IPv6 ND entry, and the source MAC address is a MAC address of the gateway device.

In an example, a destination IPv6 address in the IPv6 encapsulation header includes at least a Locator and a Function allocated to the first AP, and a source IPv6 address in the IPv6 encapsulation header includes at least a Locator and a Function allocated to the gateway device.

Based on the Local SID described above, in this example, the Function in the destination IPv6 address and the Function in the source IPv6 address in the IPv6 encapsulation header carried by the sixth packet include a same Function operation instruction value, which is a first service VLAN ID. Herein, the first service VLAN ID is a service VLAN ID to which the sixth packet belongs, such as service VLAN 3502.

In addition, in this example, the above first Locator route can be referred to as the Locator route mentioned above, which is not repeated herein. The outbound interface in the first Locator router, as described above, is a layer three interface for forwarding SRv6 services to the first AP on the gateway device.

Finally, through steps b1 to b3, how the gateway device forwards the packet when receiving the packet through the SRv6 tunnel is realized.

Below is a description of how to forward the fourth packet based on the destination IP address of the fourth packet in the above step 303.

Optionally, in this example, forwarding the fourth packet based on the destination IP address of the fourth packet in the above step 303 may include the following steps c1 to c3.

Step c1, an IP routing entry that matches the destination IP address of the fourth packet is searched for in an IP routing forwarding instance routing table.

Step c2, if an outbound interface of the IP routing entry is an SRv6 tunnel port from the gateway device to a second AP, a second Locator route that matches a Locator of the second AP is searched for in one or more obtained Locator routes, and a seventh packet is forwarded through an outbound interface in the second Locator route.

Herein, the second AP refers to any AP in general, which is named for convenience of description and not for limitation.

Optionally, in this example, the seventh packet is obtained by adding at least an IPv6 encapsulation header to the fourth packet. For example, a layer two header can be added to the fourth packet first, and then an IPv6 encapsulation header can be added to obtain the seventh packet.

Taking the seventh packet carrying the newly added layer two header and IPv6 encapsulation header as an example, in an example, the layer two header includes at least a destination MAC address and a source MAC address. The destination MAC address is a MAC address that corresponds to the IP address of the second AP and is found in the above ARP entry or IPv6 ND entry, and the source MAC address is a MAC address of the gateway device.

In an example, a destination IPv6 address in the IPv6 encapsulation header includes at least a Locator and a Function allocated to the second AP, and a source IPv6 address in the IPv6 encapsulation header includes at least a Locator and a Function allocated to the gateway device.

Based on the Local SID entry described above, in this example, the Function in the destination IPv6 address and the Function in the source IPv6 address in the IPv6 encapsulation header carried by the seventh packet include a same Function operation instruction value, which is a second service VLAN ID. Herein, the second service VLAN ID is a service VLAN ID to which the seventh packet belongs, such as service VLAN 3502.

In addition, in this example, the above second Locator route can be referred to as the Locator route mentioned above, which is not repeated herein. The outbound interface in the second Locator router, as described above, is a layer three interface for forwarding SRv6 services to the second AP on the gateway device.

Finally, through steps c1 to c2, how the gateway device forwards the packet when receiving the packet from the network side is realized.

The above descries the method provided by the examples of the present disclosure from the perspective of the gateway device in a layer three network. A method provided by the examples of the present disclosure from the perspective of an AP is described as below.

Refer to FIG. 6, which is a flowchart of another method according to an example of the present disclosure. The method is applied to an AP connected to a gateway device in a layer three network. In this example, the AP will automatically create a layer three interface for SRv6 service interaction with the gateway device locally, such as Interface VLAN 4092. Herein, an IPv6 address of the layer three interface can be automatically configured. In addition, based on the above SRv6 tunnel between the gateway device and the AP, an SRv6 tunnel port on the AP can be bound to the above layer three interface on the AP.

As shown in FIG. 6, this process can include the following steps.

Step 601, when a packet is to be forwarded to the gateway device, step 602 is performed; when a packet is received through the SRv6 tunnel between the AP and the gateway device, step 603 is performed.

Step 602, an IPv6 encapsulation header is carried in the packet and a packet carrying the IPv6 encapsulation header is forwarded through the SRv6 tunnel between the AP and the gateway device.

This step 602 is performed on the premise that the packet needs to be forwarded to the gateway device.

Optionally, a destination IP address in the IPv6 encapsulation header includes at least a Locator and a Function allocated to the gateway device, and a source IP address in the IPv6 encapsulation header includes at least a Locator and a Function allocated to the AP.

As an example, in this step 602, as described above, the source IP address and the destination IP address in the IPv6 encapsulation header can be adaptively determined based on a service VLAN ID to which the packet belongs.

For example, the IP address in the IPv6 encapsulation header can include:
Locator, which is set as the Locator allocated to the gateway device;
Function, which is set as the service VLAN ID to which the packet belongs;

Args, which carries the application identifier (including the role type and application type of the service, etc.).

Similarly, the source IP address in the IPv6 encapsulation header can include:
Locator, which is set as the Locator allocated to the AP;
Function, which is set as the service VLAN ID to which the packet belongs.

That is, in this example, the Function in the destination IPv6 address and the Function in the source IPv6 address in the IPv6 encapsulation header are the same, both of which are a third service VLAN ID. The third service VLAN ID is a service VLAN ID to which the above packet belongs.

Step 603, IPv6 decapsulation is performed on the received packet, and packet forwarding is performed based on a destination media access control (MAC) address of a decapsulated packet.

This step 603 is performed on the premise that the packet is received through the SRv6 tunnel between the AP and the gateway device. The step 603 is similar to the existing forwarding of the AP and will not be repeated herein.

So far, the process shown in FIG. 6 is completed.

Through the process shown in FIG. 6, it is realized that the SRv6 tunnel is deployed based on Locators allocated to the gateway device and the AP, and the packet is transmitted between the gateway device and the AP through the SRv6 tunnel, thus realizing the packet forwarding method applied to the layer three network where SRv6 is deployed.

The method provided in the examples of the present disclosure has been described above. The apparatus provided by the examples of the present disclosure is described below.

Refer to FIG. 7, which is a structural diagram illustrating an apparatus according to an example of the present disclosure. The apparatus is applied to a gateway device in a layer three network, where there is a SRv6 (segment routing IPv6 (internet protocol version 6)) tunnel between the gateway device and an access point (AP) connected to the gateway device, and the gateway device and different APs connected to the gateway device are allocated different locators; the apparatus includes:
a packet receiving unit, configured to receive a first packet through the SRv6 tunnel or a third packet from a network side;
a packet processing unit, configured to, when the first packet is received through the SRv6 tunnel, where a destination IP address in an IPv6 encapsulation header carried by the first packet includes at least a locator and a function allocated to the gateway device, perform IPv6 encapsulation header decapsulation on the first packet to obtain a second packet, where a destination media access control (MAC) address of the second packet is a MAC address of a layer three gateway interface associated with a virtual switch interface (VSI) instance bound to the function on the gateway device; and forward the second packet based on a destination IP address of the second packet;
when the third packet is received from the network side, where a destination IPv6 address in an IPv6 encapsulation header carried by the third packet includes at least a locator allocated to the gateway device, perform IPv6 decapsulation on the third packet to obtain a fourth packet; and forward the fourth packet based on a destination IP address of the fourth packet.

Optionally, when the gateway device serves as a locator manager, the apparatus also includes:
an allocating unit, configured to receive a locator allocation request sent by the AP; and allocate a corresponding locator to the AP based on the locator allocation request.

Optionally, a user datagram protocol (UDP) connection for locator allocation is established between the gateway device and the AP, and the locator allocation request is received through the UDP connection;
where allocating, by the allocating unit, the corresponding locator to the AP based on the locator allocation request, includes:
returning a locator allocation response to the AP through the UDP connection, where the locator allocation response carries at least a locator allocated for the AP;
receiving a designated locator allocation request returned by the AP based on the locator allocation response through the UDP connection, where the designated locator allocation request carries at least the locator carried by the locator allocation response; and
returning a locator allocation confirmation message to the AP through the UDP connection to confirm allocation of the locator to the AP.

Optionally, after allocating, by the allocating unit, the corresponding locator to the AP, when a locator occupation request sent by the AP is received through the UDP connection, if the AP is allowed to continue to occupy the allocated locator, a locator occupation confirmation message is returned to the AP through the UDP connection to confirm that the AP continues to occupy the allocated locator; where the locator occupation request is for the AP requests whether to continue to occupy the allocated locator; or
when the locator occupation request sent by the AP is not received within a preset time period, the allocated locator of the AP is released.

Optionally, after allocating, by the allocating unit, a locator to the AP connected to the gateway device, a locator route pointing to the AP is generated; where a next hop of the locator route is an IPv6 address of an interface connected to the gateway device on the AP, and an outbound interface is a layer three interface on the gateway device for forwarding SRv6 services to the AP.

Optionally, forwarding, by the packet processing unit, the second packet based on the destination IP address of the second packet, includes:
performing layer two header decapsulation on the second packet to obtain a fifth packet;
searching for an IP routing entry that matches a destination IP address of the fifth packet in an IP routing forwarding instance routing table associated with the layer three gateway interface;
if an outbound interface of the IP routing entry is an SRv6 tunnel port from the gateway device to a first AP, forwarding a sixth packet based on an outbound interface in an obtained first locator route that matches a locator of the first AP, where the outbound interface in the first locator route is a layer three interface on the gateway device for forwarding SRv6 services to the first AP;
where the sixth packet is obtained by adding at least an IPv6 encapsulation header to the fifth packet; a destination IPv6 address in the IPv6 encapsulation header carried by the sixth packet includes at least a locator and a function allocated to the first AP, and a source IPv6 address in the IPv6 encapsulation header carried by the sixth packet includes at least a locator and a function allocated to the gateway device.

Optionally, the function includes at least a function type and a function operation instruction value;
where the function in the destination IPv6 address and the function in the source IPv6 address in the IPv6 encapsulation header carried by the sixth packet include a same function operation instruction value, which is a first service virtual local area network (VLAN) identifier (ID);
where the first service VLAN ID is a service VLAN ID to which the sixth packet belongs.

Optionally, forwarding, by the packet processing unit, the fourth packet based on the destination IP address of the fourth packet, includes:
searching for an IP routing entry that matches the destination IP address of the fourth packet in an IP routing forwarding instance routing table;
if an outbound interface of the IP routing entry is an SRv6 tunnel port from the gateway device to a second AP, searching for a second locator route that matches a locator of the second AP in one or more obtained locator routes, and forwarding a seventh packet through an outbound interface in the second locator route, where the outbound interface in the second locator route is a layer three interface on the gateway device for forwarding SRv6 services to the second AP; where the seventh packet is obtained by adding at least an IPv6 encapsulation header to the fourth packet; a destination IPv6 address in the IPv6 encapsulation header carried by the seventh packet includes at least a locator and a function allocated to the second AP, and a source IPv6 address in the IPv6 encapsulation header carried by the seventh packet includes at least a locator and a function allocated to the gateway device.

Optionally, the function includes at least a function type and a function operation instruction value;
where the function in the destination IPv6 address and the function in the source IPv6 address in the IPv6 encapsulation header carried by the seventh packet include a same function operation instruction value, which is a second service virtual local area network (VLAN) identifier (ID);
where the second service VLAN ID is a service VLAN ID to which the seventh packet belongs.

Optionally, the apparatus further includes:
an entry learning unit (not shown in FIG. 7), configured to, when an IP address of a terminal connected to any one of the APs is learned, determine a function that matches the IP address of the terminal; and report the function and the IP address of the terminal to the network side, so that a destination IPv6 address in an IPv6 encapsulation header carried by a packet sent from the network side to the terminal includes at least the function; where the function is for indicating IPv6 encapsulation and searching in an IP routing forwarding instance routing table that matches the IP address of the terminal and is for forwarding packets to the terminal; where when the IP address of the terminal is internet protocol version 4 (IPv4), the IP routing forwarding instance routing table is an IPv4 virtual private network (VPN) routing table; when the IP address of the terminal is IPv6, the IP routing forwarding instance routing table is an IPv6 VPN routing table; and/or
when there is no MAC entry that matches a source MAC address of the second packet locally, perform MAC learning on the second packet to obtain the MAC entry that matches the source MAC address of the second packet; where the MAC entry includes at least the source MAC address, a VSI instance, and outbound interface information of the second packet, where the VSI instance corresponds to a service virtual local area network (VLAN) identifier (ID) to which the second packet belongs.

So far, the structural description of the apparatus shown in FIG. 7 has been completed.

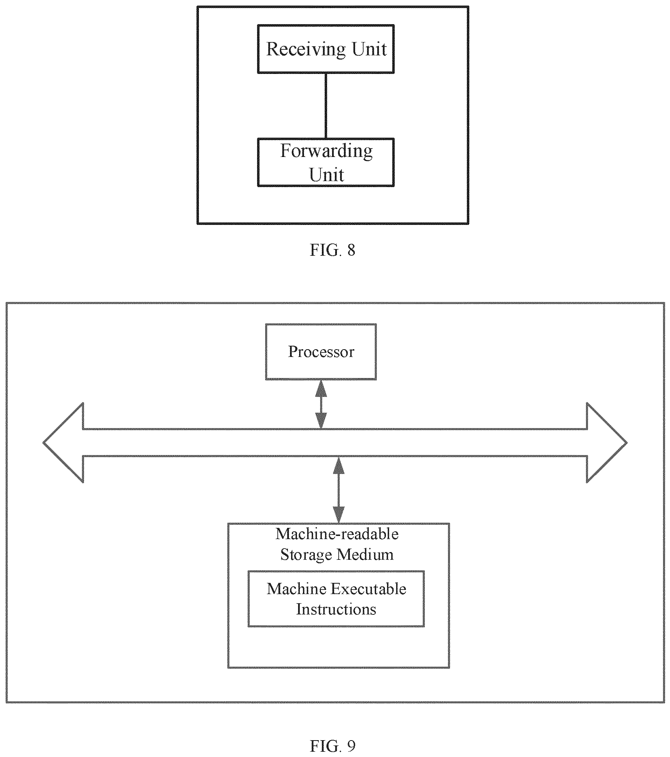

Refer to FIG. 8, which is a structural diagram illustrating another apparatus according to an example of the present disclosure. The apparatus is applied to an access point (AP) connected to a gateway device in a layer three network, where there is a SRv6 (segment routing IPv6 (internet protocol version 6)) tunnel between the gateway device and the AP, and the AP, the gateway device and other APs connected to the gateway device are allocated different locators. The apparatus includes:
a receiving unit, configured to receive packets through the SRv6 tunnel between the AP and the gateway device;
a forwarding unit, configured to, when a packet is to be forwarded to the gateway device, carry an IPv6 encapsulation header in the packet and forward a packet carrying the IPv6 encapsulation header through the SRv6 tunnel between the AP and the gateway device; where a destination IP address in the IPv6 encapsulation header includes at least a locator and a function allocated to the gateway device, and a source IP address in the IPv6 encapsulation header includes at least a locator and a function allocated to the AP; and,
when a packet is received through the SRv6 tunnel between the AP and the gateway device, perform IPv6 decapsulation on the received packet; and perform packet forwarding based on a destination media access control (MAC) address of a decapsulated packet.

Optionally, a function in a destination IPv6 address and a function in a source IPv6 address in the IPv6 encapsulation header are the same, both of which are a third service virtual local area network (VLAN) identifier (ID);
where the third service VLAN ID is a service VLAN ID to which the packet that is to be forwarded to the gateway device belongs.

So far, the structural description of the apparatus shown in FIG. 8 has been completed.

The examples of the present disclosure also provide the hardware structure of the apparatus shown in FIG. 7 or FIG. 8. Refer to FIG. 9, which is a schematic structural diagram illustrating an electronic device according to an example of the present disclosure. As shown in FIG. 9, the hardware structure can include a processor and a machine-readable storage medium which stores machine executable instructions that can be executed by the processor. The processor is configured to execute machine executable instructions to implement any one of the methods disclosed in the above examples of the present disclosure.

Based on the same application concept as the above method, an example of the present disclosure also provides a machine-readable storage medium, the machine-readable storage medium stores a number of computer instructions, and when the computer instructions are executed by a processor, the methods disclosed in the above examples of the present disclosure can be implemented.

As an example, the machine-readable storage medium can be any electronic, magnetic, optical, or other physical storage device, which can contain or store information, such as executable instructions, data, and so on. For example, the machine-readable storage medium can be a Radom Access Memory (RAM), a volatile memory, a non-volatile memory, a flash memory, a storage drive (such as a hard drive), a solid state drive, and any type of storage disk (such as CD, DVD, or the like), or similar storage media, or a combination thereof.

The systems, devices, modules, or units explained in the above examples can be implemented by computer chips or entities, or implemented by products with certain functions. A typical implementation device is a computer. The specific form of the computer can be a personal computer, a laptop computer, a cellular phone, a camera phone, a smart phone, a personal digital assistant, a media player, a navigation device, an email receiving and sending device, and a game console, a tablet computer, a wearable device, or a combination of any of these devices.

For the convenience of description, when describing the above device, the functions are divided into various units and described separately. Of course, when implementing the present disclosure, the functions of each unit can be implemented in the same or multiple software and/or hardware.

Those skilled in the art should understand that the examples of the present disclosure can be provided as methods, systems, or computer program products. Therefore, the present disclosure can adopt the form of a complete hardware example, a complete software example, or an example combining software and hardware. Moreover, the examples of the present disclosure can adopt the form of computer program products implemented on one or more computer-usable storage media (including but not limited to disk storage, CD-ROM, optical storage, or the like) containing computer-usable program codes.

The present disclosure is described with reference to flowcharts and/or block diagrams of methods, devices (systems), and computer program products according to examples of the present disclosure. It should be understood that each process and/or block in the flowchart and/or block diagram, and the combination of processes and/or blocks in the flowchart and/or block diagram can be implemented by computer program instructions. These computer program instructions can be provided to the processor of a general-purpose computer, a special-purpose computer, an embedded processor or other programmable data processing device to generate a machine, so that the instructions executed by the processor of the computer or other programmable data processing device generate an apparatus for implementing functions designated in one or more flows of the flowcharts and/or one or more blocks of the block diagrams.

Moreover, these computer program instructions can also be stored in a computer-readable memory that can guide a computer or other programmable data processing device to work in a specific manner, so that the instructions stored in the computer-readable memory generate manufactured products, the instruction device implements the functions specified in one or more processes in the flowchart and/or one or more blocks in the block diagram.

These computer program instructions can also be loaded on a computer or other programmable data processing device, so that a series of operation steps are executed on the computer or other programmable device to produce computer-implemented processing, so that the instructions executed on the computer or other programmable device provide steps for implementing the functions specified in one or more processes in the flowchart and/or one or more blocks in the block diagram.

The above descriptions are only examples of the present disclosure, and are not intended to limit the present disclosure. For those skilled in the art, the present disclosure can have various modifications and changes. Any modification, equivalent replacement, improvement, or the like made within the spirit and principle of the present disclosure shall be included in the scope of the claims of the present disclosure.

## Claims

1. A packet forwarding method, applied to a gateway device in a layer three network, wherein there is a segment routing internet protocol version 6 (IPv6) (SRv6) tunnel between the gateway device and an access point (AP) connected to the gateway device, and the gateway device and different APs connected to the gateway device are allocated different locators; the method comprising:
when a first packet is received through the SRv6 tunnel, wherein a destination IP address in an IPv6 encapsulation header carried by the first packet comprises at least a locator and a function allocated to the gateway device,
performing IPv6 encapsulation header decapsulation on the first packet to obtain a second packet, wherein a destination media access control (MAC) address of the second packet is a MAC address of a layer three gateway interface associated with a virtual switch interface (VSI) instance bound to the function on the gateway device; and
forwarding the second packet based on a destination IP address of the second packet;
when a third packet is received from a network side, wherein a destination IPv6 address in an IPv6 encapsulation header carried by the third packet comprises at least a locator allocated to the gateway device,
performing IPv6 decapsulation on the third packet to obtain a fourth packet; and forwarding the fourth packet based on a destination IP address of the fourth packet.

2. The method according to claim 1, wherein when the gateway device serves as a locator manager, a locator of the AP is allocated by the gateway device through steps comprising:
receiving a locator allocation request sent by the AP; and
allocating a corresponding locator to the AP based on the locator allocation request.

3. The method according to claim 2, wherein a user datagram protocol (UDP) connection for locator allocation is established between the gateway device and the AP, and the locator allocation request is received through the UDP connection;
wherein allocating the corresponding locator to the AP based on the locator allocation request comprises:
returning a locator allocation response to the AP through the UDP connection, wherein the locator allocation response carries at least a locator allocated for the AP;
receiving a designated locator allocation request returned by the AP based on the locator allocation response through the UDP connection, wherein the designated locator allocation request carries at least the locator carried by the locator allocation response; and
returning a locator allocation confirmation message to the AP through the UDP connection to confirm allocation of the locator to the AP.

4. The method according to claim 3, wherein after allocating the corresponding locator to the AP, the method further comprises:
when a locator occupation request sent by the AP is received through the UDP connection, if the AP is allowed to continue to occupy the allocated locator,
returning a locator occupation confirmation message to the AP through the UDP connection to confirm that the AP continues to occupy the allocated locator;
wherein the locator occupation request is for the AP requests whether to continue to occupy the allocated locator;
when the locator occupation request sent by the AP is not received within a preset time period,
releasing the allocated locator of the AP.

5. The method according to claim 1, further comprising:
after allocating, by the gateway device as a locator manager, a locator to the AP connected to the gateway device, generating a locator route pointing to the AP;
wherein a next hop of the locator route is an IPv6 address of an interface connected to the gateway device on the AP, and an outbound interface is a layer three interface on the gateway device for forwarding SRv6 services to the AP.

6. The method according to claim 1 or 5, wherein forwarding the second packet based on the destination IP address of the second packet comprises:
performing layer two header decapsulation on the second packet to obtain a fifth packet;
searching for an IP routing entry that matches a destination IP address of the fifth packet in an IP routing forwarding instance routing table associated with the layer three gateway interface;
if an outbound interface of the IP routing entry is an SRv6 tunnel port from the gateway device to a first AP,
forwarding a sixth packet based on an outbound interface in an obtained first locator route that matches a locator of the first AP, wherein the outbound interface in the first locator route is a layer three interface on the gateway device for forwarding SRv6 services to the first AP;
wherein the sixth packet is obtained by adding at least an IPv6 encapsulation header to the fifth packet; a destination IPv6 address in the IPv6 encapsulation header carried by the sixth packet comprises at least a locator and a function allocated to the first AP, and a source IPv6 address in the IPv6 encapsulation header carried by the sixth packet comprises at least a locator and a function allocated to the gateway device.

7. The method according to claim 6, wherein the function comprises at least a function type and a function operation instruction value;
wherein the function in the destination IPv6 address and the function in the source IPv6 address in the IPv6 encapsulation header carried by the sixth packet comprise a same function operation instruction value, which is a first service virtual local area network (VLAN) identifier (ID);
wherein the first service VLAN ID is a service VLAN ID to which the sixth packet belongs.

8. The method according to claim 1 or 5, wherein forwarding the fourth packet based on the destination IP address of the fourth packet comprises:
searching for an IP routing entry that matches the destination IP address of the fourth packet in an IP routing forwarding instance routing table;
if an outbound interface of the IP routing entry is an SRv6 tunnel port from the gateway device to a second AP,
searching for a second locator route that matches a locator of the second AP in one or more obtained locator routes, and
forwarding a seventh packet through an outbound interface in the second locator route, wherein the outbound interface in the second locator route is a layer three interface on the gateway device for forwarding SRv6 services to the second AP;
wherein the seventh packet is obtained by adding at least an IPv6 encapsulation header to the fourth packet; a destination IPv6 address in the IPv6 encapsulation header carried by the seventh packet comprises at least a locator and a function allocated to the second AP, and a source IPv6 address in the IPv6 encapsulation header carried by the seventh packet comprises at least a locator and a function allocated to the gateway device.

9. The method according to claim 8, wherein the function comprises at least a function type and a function operation instruction value;
wherein the function in the destination IPv6 address and the function in the source IPv6 address in the IPv6 encapsulation header carried by the seventh packet comprise a same function operation instruction value, which is a second service virtual local area network (VLAN) identifier (ID);
wherein the second service VLAN ID is a service VLAN ID to which the seventh packet belongs.

10. The method according to claim 8, further comprising:
when an IP address of a terminal connected to any one of the APs is learned,
determining a function that matches the IP address of the terminal; and
reporting the function and the IP address of the terminal to the network side, so that a destination IPv6 address in an IPv6 encapsulation header carried by a packet sent from the network side to the terminal comprises at least the function;
wherein the function that matches the IP address of the terminal is for indicating IPv6 encapsulation and searching in an IP routing forwarding instance routing table that matches the IP address of the terminal and is for forwarding packets to the terminal;
wherein when the IP address of the terminal is internet protocol version 4 (IPv4), the IP routing forwarding instance routing table is an IPv4 virtual private network (VPN) routing table; when the IP address of the terminal is IPv6, the IP routing forwarding instance routing table is an IPv6 VPN routing table.

11. The method according to claim 1, further comprising:
when there is no MAC entry that matches a source MAC address of the second packet locally,
performing MAC learning on the second packet to obtain the MAC entry that matches the source MAC address of the second packet;
wherein the MAC entry comprises at least the source MAC address, a VSI instance, and outbound interface information of the second packet, wherein the VSI instance corresponds to a service virtual local area network (VLAN) identifier (ID) to which the second packet belongs.

12. A packet forwarding method, applied to an access point (AP) connected to a gateway device in a layer three network, wherein there is a segment routing internet protocol version 6 (IPv6) (SRv6) tunnel between the gateway device and the AP, and the AP, the gateway device and other APs connected to the gateway device are allocated different locators; the method comprising:
when a packet is to be forwarded to the gateway device,
carrying an IPv6 encapsulation header in the packet and forwarding a packet carrying the IPv6 encapsulation header through the SRv6 tunnel between the AP and the gateway device;
wherein a destination IP address in the IPv6 encapsulation header comprises at least a locator and a function allocated to the gateway device, and a source IP address in the IPv6 encapsulation header comprises at least a locator and a function allocated to the AP;
when a packet is received through the SRv6 tunnel between the AP and the gateway device,
performing IPv6 decapsulation on the received packet; and
performing packet forwarding based on a destination media access control (MAC) address of a decapsulated packet.

13. The method according to claim 12, wherein a function in a destination IPv6 address and a function in a source IPv6 address in the IPv6 encapsulation header are the same, both of which are a third service virtual local area network (VLAN) identifier (ID);
wherein the third service VLAN ID is a service VLAN ID to which the packet that is to be forwarded to the gateway device belongs.

14. A packet forwarding apparatus, applied to a gateway device in a layer three network, wherein there is a segment routing internet protocol version 6 (IPv6) (SRv6) tunnel between the gateway device and an access point (AP) connected to the gateway device, and the gateway device and different APs connected to the gateway device are allocated different locators; the apparatus comprising:
a packet receiving unit, configured to receive a first packet through the SRv6 tunnel or a third packet from a network side;
a packet processing unit, configured to,
when the first packet is received through the SRv6 tunnel, wherein a destination IP address in an IPv6 encapsulation header carried by the first packet comprises at least a locator and a function allocated to the gateway device,
perform IPv6 encapsulation header decapsulation on the first packet to obtain a second packet, wherein a destination media access control (MAC) address of the second packet is a MAC address of a layer three gateway interface associated with a virtual switch interface (VSI) instance bound to the function on the gateway device; and
forward the second packet based on a destination IP address of the second packet;
when the third packet is received from the network side, wherein a destination IPv6 address in an IPv6 encapsulation header carried by the third packet comprises at least a locator allocated to the gateway device,
perform IPv6 decapsulation on the third packet to obtain a fourth packet; and
forward the fourth packet based on a destination IP address of the fourth packet.

15. A packet forwarding apparatus, applied to an access point (AP) connected to a gateway device in a layer three network, wherein there is a segment routing internet protocol version 6 (IPv6) (SRv6) tunnel between the gateway device and the AP, and the AP, the gateway device and other APs connected to the gateway device are allocated different locators; the apparatus comprising:
a receiving unit, configured to receive packets through the SRv6 tunnel between the AP and the gateway device;
a forwarding unit, configured to,
when a packet is to be forwarded to the gateway device,
carry an IPv6 encapsulation header in the packet and forward a packet carrying the IPv6 encapsulation header through the SRv6 tunnel between the AP and the gateway device;
wherein a destination IP address in the IPv6 encapsulation header comprises at least a locator and a function allocated to the gateway device, and a source IP address in the IPv6 encapsulation header comprises at least a locator and a function allocated to the AP;
when a packet is received through the SRv6 tunnel between the AP and the gateway device,
perform IPv6 decapsulation on the received packet; and
perform packet forwarding based on a destination media access control (MAC) address of a decapsulated packet.
